# EUROPEAN PATENT SPECIFICATION

(11) **EP 4 072 005 B1**
(45) Date of publication and mention of the grant of the patent: **11.11.2026**
(21) Application number: 20897399.0
(22) Date of filing: 10.09.2020
(51) Int. Cl.: H02P 21/00, H02P 21/14, H02P 21/18, H02P 21/26

(54) **POWER CONVERSION DEVICE**
STROMUMWANDLUNGSVORRICHTUNG
DISPOSITIF DE CONVERSION DE PUISSANCE

(30) Priority: 05.12.2019 JP 2019220626
(43) Date of publication of application: 12.10.2022
(73) Proprietor: HITACHI INDUSTRIAL EQUIPMENT SYSTEMS CO., LTD., Tokyo 101-0022 (JP)
(72) Inventor: TOBARI, Kazuaki, Tokyo 100-8280 (JP); ONUMA, Yusaku, Tokyo 101-0022 (JP); SUGIMOTO, Takuya, Tokyo 101-0022 (JP); TOKASHIKI, Mutsuo, Tokyo 101-0022 (JP)
(74) Representative: MERH-IP Matias Erny Reichl Hoffmann Patentanwälte PartG mbB
(86) International application number: PCT/JP2020/034294
(87) International publication number: WO 2021/111695

(56) References cited:
- WO-A1-2017/056649
- JP-A- 2017 070 118
- JP-A- 2017 153 273
- JP-A- 2019 022 446
- JP-A- 2019 022 446
- JP-A- H09 163 782
- JP-A- H11 151 000
- JP-A- H11 151 000

## Description

### TECHNICAL FIELD

The present invention relates to a power conversion device that drives an induction motor.

### BACKGROUND ART

As a highly accurate control method for an induction motor, as described in Patent Document 1, there is a description of a technology for estimating a stator magnetic flux vector of an induction motor based on a difference between an output voltage from a power conversion unit to an induction motor and the amount of voltage drop caused by a winding resistance of an electric motor.

Patent Document 2 discloses a control device for controlling an induction motor by using a power converter such as an inverter comprising: an invalid power computer for computing an invalid power computed value from a primary current and primary voltage of an induction motor; an invalid power command computer for computing an invalid power command value to minimize a loss of the induction motor from the primary current, primary angular frequency and electric constant of the induction motor; and an invalid power regulator, a converter and an adder or the like for controlling the primary voltage of the induction motor such that the invalid power computed value becomes equal to the invalid power command value.

Patent Document 3 discloses to obtain a predetermined torque output by regulating the mutual inductance such that the difference of secondary flux outputted from first and second flux operating means becomes zero: An induction motor controller comprising a first regulating means which increases the output T2 if the instantaneous reactive power Q2>Q1 and decreases the output T2 if Q2<Q1 until Q1=Q2 is satisfied.

Patent Document 4 discloses a control method for a power converter including: a step in which a calculation part generates a torque by a magnetic flux generated by an electric current of d-axis which is a magnetic flux axis component and an electric current of q-axis which is a torque axis and calculates a voltage command value of the d-axis and a voltage command value of the q-axis so that a secondary magnetic flux estimation value of the q-axis is maintained at a predetermined value; a step in which the calculation part controls a power converter on the basis of the voltage command value of the d-axis and the voltage command value of the q-axis.

Patent Document 5 discloses a power conversion device that achieves auto-tuning of mutual inductance M while taking into account magnetic saturation, and achieves automatic setting pertaining to a command value for excitation current, and that, in a vector control operation, achieves high torque in a stable manner even in an extremely low-speed region.

### CITATION LIST

### PATENT DOCUMENT

Patent Document 1: JP 2016-32364 A
Patent Document 2: JP 2017 153273 A
Patent Document 3: JP H11 151000 A
Patent Document 4: JP 2019 022446 A
Patent Document 5: WO 2017/056649 A1

### SUMMARY OF THE INVENTION

### PROBLEMS TO BE SOLVED BY THE INVENTION

In the technology described in Patent Document 1, the magnetic flux vector is estimated using a rest coordinate system α and β. At each axis component of αβ, the magnetic flux vector changes into a sine wave shape. Therefore, in a high-speed range, a value of the amplitude of the sine wave cannot be accurately detected unless a sampling period for detecting the change in the sine wave is sufficiently short. However, since there is a limit to the sampling period, it is difficult to improve the accuracy of magnetic flux estimation in a high-speed range exceeding the limit.

In Patent Document 1, it is considered that a speed command value and an actual rotation speed of the induction motor deviate from each other due to insufficient accuracy of magnetic flux estimation, resulting in a poor speed characteristic. Further, when the magnetic flux is estimated in a high-speed range, there is a problem that the speed characteristic deteriorates due to an error of an electric circuit constant.

An object of the invention is to provide a power conversion device that prevents deterioration of a speed characteristic in a high-speed range.

### SOLUTIONS TO PROBLEMS

A preferred example of the invention is a power conversion device including
a power converter including a switching element, and
a control unit for controlling the power converter from voltage information and current information of an induction motor,
in which the control unit
computes first power information computed from voltage information and current information of the induction motor,
computes second power information from an electric circuit constant, a current command value, an output frequency command value, and a magnetic flux estimated value of the induction motor, and
computes the magnetic flux estimated value so that the second power information follows the first power information, wherein the first power information and the second power information are active power. The control unit computes the first power information from d-axis and q-axis voltage command values and d-axis and q-axis detection currents or computes the first power information from a voltage command value of a three-phase AC and an amplitude value of a current detection value, computes the second power information from the electric circuit constant, d-axis and q-axis current command values, the output frequency command value, and a d-axis magnetic flux estimated value of the induction motor (1), and computes the d-axis magnetic flux estimated value so that the second power information follows the first power information.

### EFFECTS OF THE INVENTION

According to the invention, it is possible to prevent deterioration of a speed characteristic in a high-speed range.

### BRIEF DESCRIPTION OF THE DRAWINGS

Fig. 1 is a configuration diagram of a power conversion device in a first embodiment.
Fig. 2 is a configuration diagram of a d-axis secondary magnetic flux estimation computation unit in the first embodiment.
Fig. 3 is a diagram illustrating a control characteristic when a comparative example is used.
Fig. 4 is a diagram illustrating a control characteristic when the first embodiment is used.
Fig. 5 is a configuration diagram of a d-axis secondary magnetic flux estimation computation unit as a modification of the first embodiment.
Fig. 6 is a configuration diagram for confirming manifestation in the first embodiment.
Fig. 7 is a configuration diagram of a d-axis secondary magnetic flux estimation computation unit in a second embodiment.
Fig. 8 is a configuration diagram of a d-axis secondary magnetic flux estimation computation unit in a third embodiment.
Fig. 9 is a configuration diagram of a d-axis secondary magnetic flux estimation computation unit in a fourth embodiment not encompassed by the wording of the claims.
Fig. 10 is a configuration diagram of a d-axis secondary magnetic flux estimation computation unit in a fifth embodiment not encompassed by the wording of the claims.
Fig. 11 is a configuration diagram including a power conversion device and an induction motor in a sixth embodiment.

### MODE FOR CARRYING OUT THE INVENTION

Hereinafter, embodiments will be described in detail with reference to the drawings.

### First embodiment

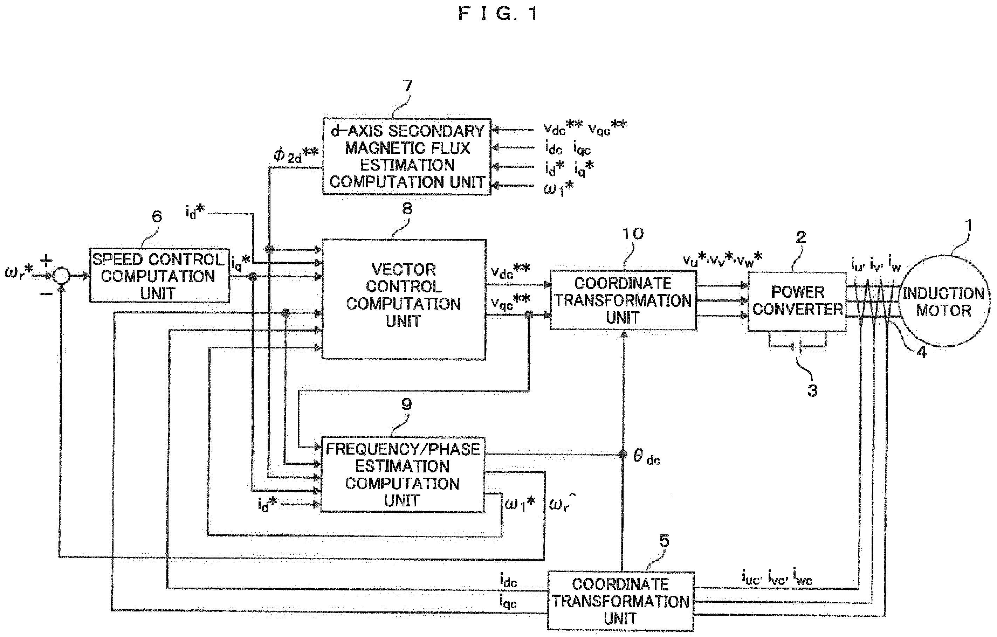

Fig. 1 is a configuration diagram of a power conversion device in a first embodiment. An induction motor 1 generates torque by magnetic flux generated by a current of a magnetic flux axis (d-axis) component and a current of a torque axis (q-axis) component orthogonal to a magnetic flux axis.

The power converter 2 includes a semiconductor element as a switching element. The power converter 2 inputs three-phase AC voltage command values vᵤ*, vᵥ*, and v_{w}*, and outputs voltage values proportional to the three-phase AC voltage command values vᵤ*, vᵥ*, and v_{w}*. An output voltage value and an output frequency value of the induction motor 1 are changed based on an output of the power converter 2. An IGBT may be used as the switching element.

A DC power supply 3 supplies a DC voltage and a DC current to the power converter 2.

A current detector 4 outputs i_{uc}, i_{vc}, and i_{wc}, which are detection value of three-phase alternating currents iᵤ, iᵥ, and i_{w} of the induction motor 1. Further, current detector 4 may detect AC currents of two of the three phases of the induction motor 1, for example, the u-phase and the w-phase, and the v-phase AC current may be obtained as iᵥ = -(iᵤ + i_{w}) from an AC condition (iᵤ + iᵥ + i_{w} = 0). In the present embodiment, the current detector 4 is provided inside the power conversion device. However, the current detector 4 may be provided outside the power conversion device.

The control unit includes a coordinate transformation unit 5, a speed control computation unit 6, a d-axis secondary magnetic flux estimation computation unit 7, a vector control computation unit 8, a frequency/phase estimation computation unit 9, and a coordinate transformation unit 10 described below. Then, the control unit controls the power converter 2.

The control unit includes semiconductor integrated circuits (arithmetic control means) such as a microcomputer and a DSP (Digital Signal Processor). A part or whole of control unit can be configured by hardware such as an ASIC (Application Specific Integrated Circuit) or an FPGA (Field Programmable Gate Array).

Next, each component of the control unit that controls the power converter 2 will be described.

The coordinate transformation unit 5 outputs a d-axis current detection value i_{dc} and a q-axis current detection value i_{qc} from the AC current detection values i_{uc}, i_{vc}, and i_{wc} of the three-phase alternating currents iᵤ, iᵥ, and i_{w} and a phase computation value θ_{dc}.

The speed control computation unit 6 outputs a q-axis current command value i_{q}* computed based on a frequency command value ωᵣ* and a frequency estimated value ωᵣ^.

The d-axis secondary magnetic flux estimation computation unit 7 outputs a d-axis magnetic flux estimated value ϕ_{2d}** computed based on d-axis and q-axis voltage command values v_{dc}** and v_{qc}** , current detection values i_{dc} and i_{qc}, current command values i_{d}* and i_{q}*, and an output frequency command value ω₁*.

The vector control computation unit 8 outputs the d-axis and q-axis voltage command values v_{dc}** and v_{qc}** computed based on the d-axis secondary magnetic flux estimated value ϕ_{2d}**, the d-axis and q-axis current command values i_{d}* and i_{q}*, the current detection values i_{dc} and i_{qc}, and the output frequency command value ω₁*.

The frequency/phase estimation computation unit 9 outputs the frequency estimated value ωᵣ^, the output frequency command value ω₁*, and the phase computation value θ_{dc} computed based on the q-axis voltage command value v_{qc}**, the d-axis current command value i_{d}*, the q-axis current command value i_{q}*, the current detection value i_{qc}, and the d-axis secondary magnetic flux estimated value ϕ_{2d}**.

The coordinate transformation unit 10 outputs three-phase AC voltage command values vᵤ*, vᵥ*, and v_{w}* from the d-axis voltage command value v_{dc}**, the q-axis voltage command value v_{qc}**, and the phase computation value θ_{dc}.

First, a basic operation of sensorless vector control when the d-axis secondary magnetic flux estimation computation unit 7 is used will be described.

The speed control computation unit 6 computes a q-axis current command value i_{q}*, which is a torque current command, according to (Equation 1) by proportional control and integral control so that the frequency estimated value ωᵣ^ follows the frequency command value ωᵣ*.
[Equation 1] ${i}_{q} * = \left({ω}_{r}*-{{ω}_{r}}^{∧}\right) \left({K}_{sp}+\frac{{K}_{si}}{s}\right)$ (1)

Here, Kₛₚ denotes proportional gain of speed control, and Kₛᵢ denotes integral gain of speed control.

First, the vector control computation unit 8 outputs d-axis and q-axis voltage command values v_{dc}* and v_{qc}* according to (Equation 2) using the d-axis secondary magnetic flux estimated value ϕ_{2d}**, the d-axis and q-axis current command values i_{d}* and i_{q}*, and the output frequency command value ω₁*.
[Equation 2] $\left[\begin{matrix}{v}_{dc} * = {R}_{1} * {i}_{d} * - {ω}_{1} {* L}_{σ} * \frac{1}{1 + T acr s} {i}_{q} * \\ {v}_{qc} * = {R}_{1} * {i}_{q} * + {ω}_{1} * \left({L}_{σ}*\frac{1}{1 + T acr s}{i}_{d}*+\frac{M *}{{L}_{2} *}{ϕ}_{2 d}**\right)\end{matrix}\right]$ (2)

Here, T_{acr} denotes a time constant corresponding to a current control delay, R₁ denotes a primary resistance value, L_{σ}, denotes a leakage inductance value, M denotes a mutual inductance value, and L₂ denotes a secondary side inductance value.

Second, d-axis and q-axis voltage correction values Δv_{dc} and Δv_{qc} are computed according to (Equation 3) by proportional control and integral control so that the current detection values i_{dc} and i_{qc} of each component follow the d-axis and q-axis current command values i_{d}* and i_{q}*.
[Equation 3] $\left[\begin{matrix}{Δv}_{dc} = \left({K}_{pd}+\frac{{K}_{id}}{s}\right) \left({i}_{d}*-{i}_{dc}\right) \\ {Δv}_{qc} = \left({K}_{pq}+\frac{{K}_{iq}}{s}\right) \left({i}_{q}*-{i}_{qc}\right)\end{matrix}\right]$ (3)

Here, K_{pd} denotes proportional gain of d-axis current control, K_{id} denotes integral gain of d-axis current control, K_{pq} denotes proportional gain of q-axis current control, and K_{iq} denotes integral gain of q-axis current control.

Further, according to (Equation 4), the d-axis and q-axis voltage command values v_{dc}** and v_{dc}** are computed.
[Equation 4] $\left[\begin{matrix}{v}_{dc} * * = {v}_{dc} * + {Δv}_{dc} \\ {v}_{qc} * * = {v}_{qc} * + {Δv}_{qc}\end{matrix}\right]$ (4)

Based on the q-axis voltage command value v_{qc}**, the d-axis current command value i_{d}*, the q-axis current command value i_{q}*, the current detection value i_{qc}, and the d-axis secondary magnetic flux estimated value ϕ_{2d}**, the frequency/phase estimation computation unit 9 computes the frequency estimated value ωᵣ^ according to (Equation 5), computes the output frequency command value ω₁* according to (Equation 6), and computes the phase computation value θ_{dc} according to (Equation 7), respectively.
[Equation 5] ${ω}_{r}^{∧} = \frac{1}{1 + {T}_{obs} s} ⋅ \left(\frac{{v}_{qc} * * - {ω}_{1} * {L}_{σ} * \frac{1}{1 + {T}_{acr} s} id * - \left(R*{i}_{qc}+{L}_{σ}*s\right) {i}_{qc}}{\frac{M *}{{L}_{2} *} {ϕ}_{2 d} * *}\right)$ (5)

Here, R* denotes a set value obtained by adding primary resistance and secondary resistance, and T_{obs} denotes a time constant for speed estimation.
[Equation 6] ${ω}_{1} * = {{ω}_{r}}^{∧} + \frac{M *}{{T}_{2} *} \frac{{i}_{q} *}{{ϕ}_{2 d} * *}$ (6)
[Equation 7] ${θ}_{dc} = \frac{1}{s} ⋅ {{ω}_{1}}^{∗}$ (7)

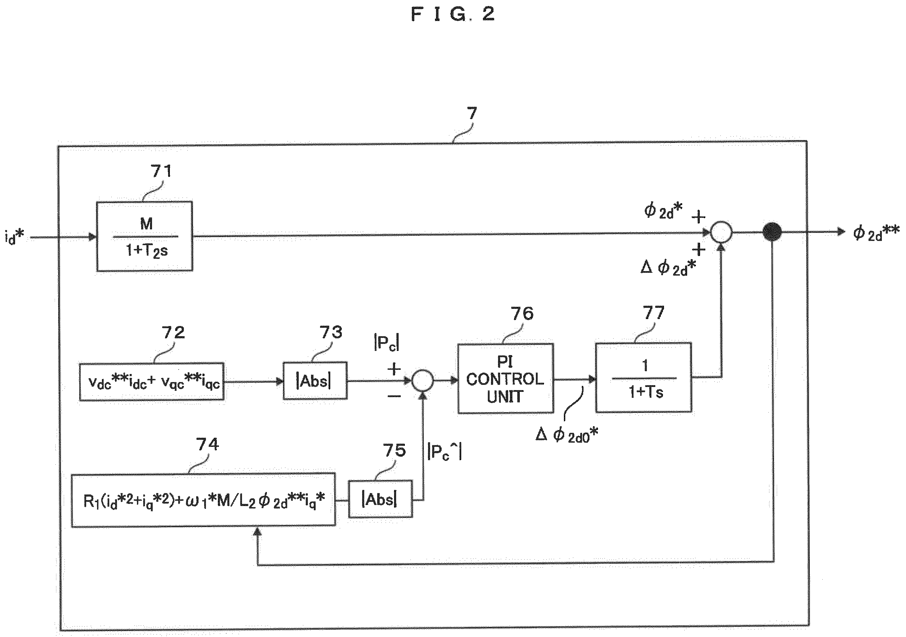

Fig. 2 illustrates a block of the d-axis secondary magnetic flux estimation computation unit 7, which is a feature of the present embodiment.

In an LPF (Low Pass Filter) 71, gain is mutual inductance M and a time constant is a secondary time constant T₂, the d-axis current command value i_{d}* is input to the LPF 71, and the LPF 71 computes a d-axis secondary magnetic flux command value ϕ_{2d}*.

A first active power computation unit 72 computes first active power P_{c} according to (Equation 8) using the d-axis and q-axis voltage command values v_{dc}** and v_{qc}** and the current detection values i_{dc} and i_{qc}.
[Equation 8] ${P}_{c} = {{v}_{dc}}^{∗ ∗} {i}_{dc} + {{v}_{qc}}^{∗ ∗} {i}_{qc}$ (8)

To support both power running/regenerative operation modes, an output of the first active power computation unit 72 is passed through an absolute value computation unit 73 to compute the absolute value |P_{c}| of first active power P_{c}.

A second active power computation unit 74 computes second active power P_{c}^ according to (Equation 9) using the d-axis and q-axis current command values i_{d}* and i_{q}*, the output frequency command value ω₁*, R1, M, and L₂ which are electric circuit constants of the induction motor 1, and the d-axis secondary magnetic flux estimated value Φ_{2d}**.
[Equation 9] ${{P}_{c}}^{∧} = {R}_{1} * \left({{i}_{d}}^{* 2}+{{i}_{q}}^{* 2}\right) + {ω}_{1} * {M * / L}_{2} * {ϕ}_{2 d} * * {i}_{q} *$ (9)

To support both power running/regenerative operation modes, an output of the second active power computation unit 74 is passed through an absolute value computation unit 75 to compute the absolute value |P_{c}^| of second active power P_{c}^.

A PI control unit 76 performs P (proportional) control and I (integral) control so that the absolute value |P_{c}^| of the second active power P_{c}^ follows the absolute value |P_{c}| of the first active power P_{c}, and computes a d-axis secondary magnetic flux command correction value ΔΦ_{2d0}* .

A LPF 77 has gain with a time constant of T, the secondary magnetic flux command correction value Δϕ_{2d0}* is input to the LPF 77, and the LPF 77 outputs a d-axis secondary magnetic flux command correction value Δϕ_{2d}*. Using Δϕ_{2d}* and the d-axis secondary magnetic flux command value ϕ_{2d}*, the d-axis secondary magnetic flux estimated value ϕ_{2d}** is computed according to (Equation 10).
[Equation 10] ${{ϕ}_{2 d}}^{∗ ∗} = {{Δϕ}_{2 d}}^{∗} + {{ϕ}_{2 d}}^{∗}$ (10)

Next, a principle that the present embodiment has a high-precision control characteristic will be described.

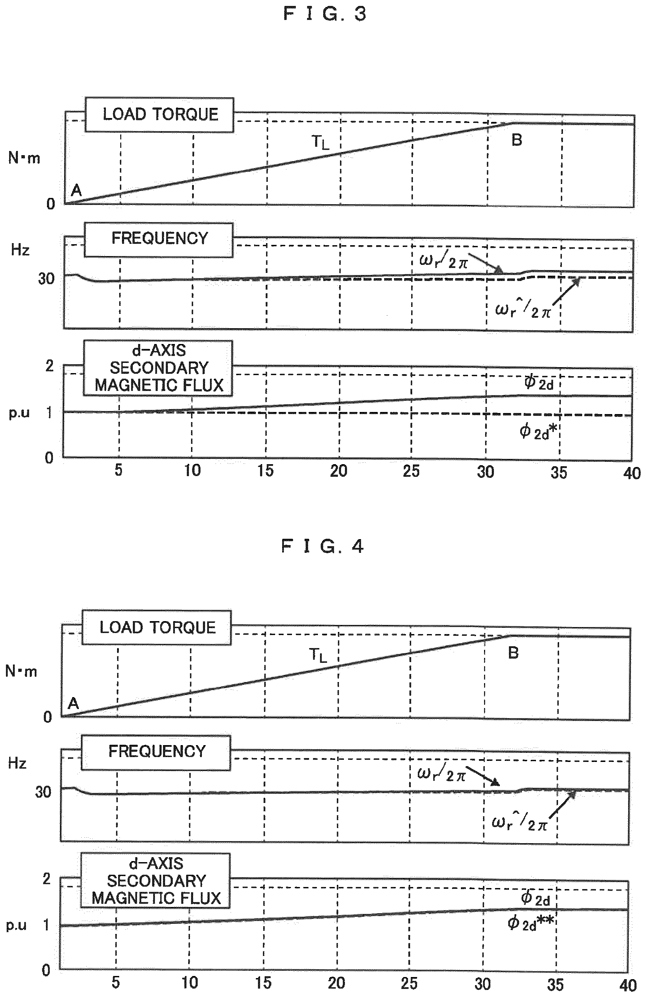

Fig. 3 illustrates a control characteristic as a comparative example not using the d-axis secondary magnetic flux estimation computation unit 7 (Δϕ_{2d}* = 0). This figure is a simulation result when there is an error of +20% in a set value L_{σ}* of the leakage inductance included in a computation formula of the d-axis and q-axis voltage command values v_{dc}** and v_{dc}** shown in (Equation 2) and a computation formula of the frequency estimated value (speed estimated value) ωᵣ^ shown in (Equation 5).

A vertical axis in an upper part indicates the load torque T_{L} (N·m), a vertical axis in a middle part indicates the frequency estimated value ωᵣ^ (Hz) and the frequency ωᵣ (Hz) of the induction motor, a vertical axis in a lower part indicates the d-axis secondary magnetic flux ϕ_{2d} (p.u) and a command value ϕ_{2d}* (p.u) thereof, and a horizontal axis indicates time (seconds).

The ramp-shaped load torque T_{L} starts from point A in the figure and becomes twice the rated torque (100%) torque at point B in the figure, and a state of applying 200% torque is kept from the right side of point B. It can be seen that the frequency ωᵣ of the induction motor is faster than the frequency command value ωᵣ* of 30 Hz.

Meanwhile, the frequency estimated value ωᵣ^ is about 30Hz, and the output frequency command value ω₁* is calculated by (Equation 6). Thus, an estimated error of the frequency is Δω = (ωᵣ - ωᵣ^) , and a slip error Δωₛ of the induction motor becomes (ωₛ - ωₛ^). Due to this slip error Δωₛ, the d-axis secondary magnetic flux ϕ_{2d} increases. Then, the control characteristic (characteristic of the velocity ω) deteriorates depending on the set value L_{σ}* of the leakage inductance. That is, there is a problem that the rotation speed of the induction motor deviates from the speed command value, resulting in deterioration of the speed characteristic.

In the present embodiment, the first active power P_{c} not including information of the leakage inductance L_{σ}, which is an electric circuit constant, is computed from (Equation 8) using the d-axis voltage command value v_{dc}** and the q-axis voltage command value v_{qc}** as the voltage information of the induction motor, and the d-axis current detection value i_{dc} and the q-axis current detection value i_{qc} as the current information of the induction motor.

In addition, the second active power P_{c}^ not including information of the leakage inductance L_{σ} is computed by (Equation 9) using the d-axis current command value i_{d}*, the q-axis current command value i_{q}*, the output frequency command value ω₁*, the electric circuit constants R₁, M, and L₂ of the induction motor, and the d-axis secondary magnetic flux estimated value ϕ_{2d}**.

The control characteristic can be improved by estimating ϕ_{2d}** so that the absolute value |P_{c}^| of P_{c}^ follows the absolute value |P_{c}| of P_{c} and using an estimated value ϕ_{2d}^ for the vector control computation unit 8 and the frequency/phase estimation computation unit 9.

The control characteristic in the first embodiment is illustrated in Fig. 4. In Fig. 4, a horizontal axis and a vertical axis are the same as those of Fig. 3. The d-axis secondary magnetic flux estimation computation unit 7 is operated to apply the same load torque T_{L} as that of Fig. 3. Since the d-axis secondary magnetic flux ϕ_{2d} is estimated with high accuracy (ϕ_{2d} ≈ ϕ_{2d}**), it can be seen that the frequency estimated value ωᵣ^ almost matches the frequency ωᵣ of the induction motor, and the effect of the present embodiment is clear.

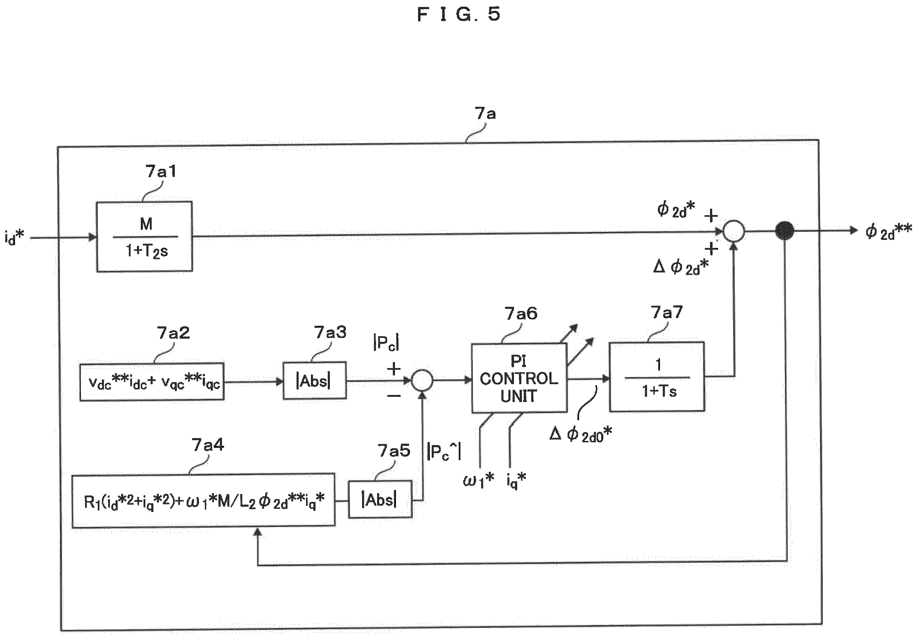

In addition, in the above embodiment, in the d-axis secondary magnetic flux estimation computation unit 7, the gains (Kₚ and Kᵢ) of the proportional control and the integral control are set to fixed values. However, as illustrated in Fig. 5, the gains may be changed according to the output frequency command value ω₁* or the q-axis current command value i_{q}*.

Reference symbol 7a of Fig. 5 corresponds to the d-axis secondary magnetic flux estimation computation unit 7. Reference symbols 7a1, 7a2, 7a3, 7a4, 7a5, and 7a7 of Fig. 5 are the same as the LPF 71, the first active power computation unit 72, the absolute value computation unit 73, the second active power computation unit 74, the absolute value computation unit 75, and LPF 77 of Fig. 2, respectively.

In a PI control unit 7a6 of Fig. 5, by changing the gains (Kₚ and Kᵢ) of the proportional control and the integral control in approximately proportion to the magnitude of the output frequency command value ω₁* or the q-axis current command value i_{q}*, the absolute value |P_{c}| of the first active power P_{c} changes to the absolute value |P_{c}^| of the second active power P_{c}^ according to the frequency or the current value. That is, it is possible to realize a highly accurate control characteristic in a shorter time even from a low speed range to a high speed range and from a light load to a heavy load.

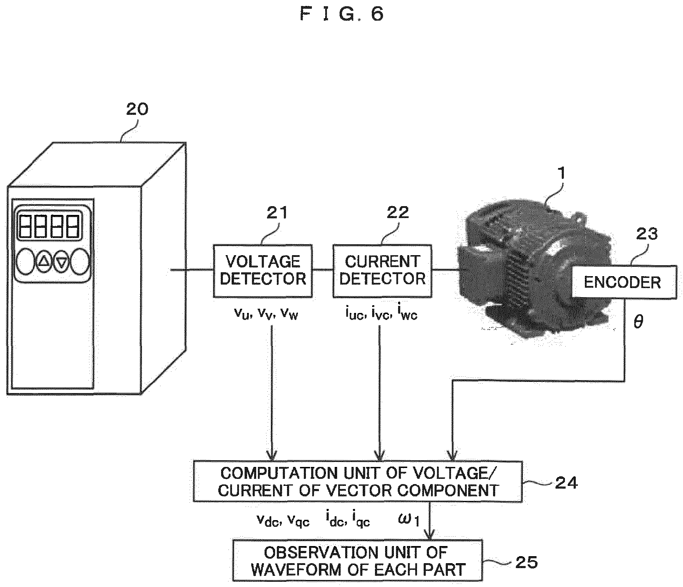

Here, a verification method when the present embodiment is adopted will be described with reference to Fig. 6. A voltage detector 21 and a current detector 22 are attached to a power conversion device 20 that drives the induction motor 1, and an encoder 23 is attached to a shaft of the induction motor 1.

Three-phase AC voltage detection values (v_{uc}, v_{vc}, and v_{wc}), which are outputs of the voltage detector 21, three-phase AC current detection values (i_{uc}, i_{vc}, and i_{wc}), and a position θ, which is an output of the encoder, are input to a vector voltage/current component computation unit 24 to compute vector voltage components v_{dc} and v_{qc}, vector current components i_{dc} and i_{qc}, and a detection value ωᵣ, which is a derivative of the position θ.

In an observation unit 25 of a waveform of each part, the d-axis secondary magnetic flux estimated value ϕ_{2d}^ is computed using (Equation 11).
[Equation 11] ${{ϕ}_{2 d}}^{∧} = \left|\frac{{v}_{dc} {i}_{dc} + {v}_{qc} {i}_{qc} - {R}_{1} * \left({{i}_{dc}}^{2}+{{i}_{qc}}^{2}\right)}{{ω}_{1} M * / {L}_{2} * {i}_{qc}}\right|$ (11)

It becomes clear that when the magnitude of the leakage inductance L_{σ}* set in the power converter 2 is changed, the magnitude of ϕ_{2d}^ is changed, and when the detection value ωᵣ almost matches the command value, the present embodiment is adopted.

Note that in the present embodiment, the frequency estimated value ωᵣ^ is computed. However, the frequency ωᵣ may be detected by attaching the encoder to the induction motor. Since the d-axis secondary magnetic flux can be estimated with high accuracy, a highly accurate control characteristic can be realized by correcting the slip command value.

### Second embodiment

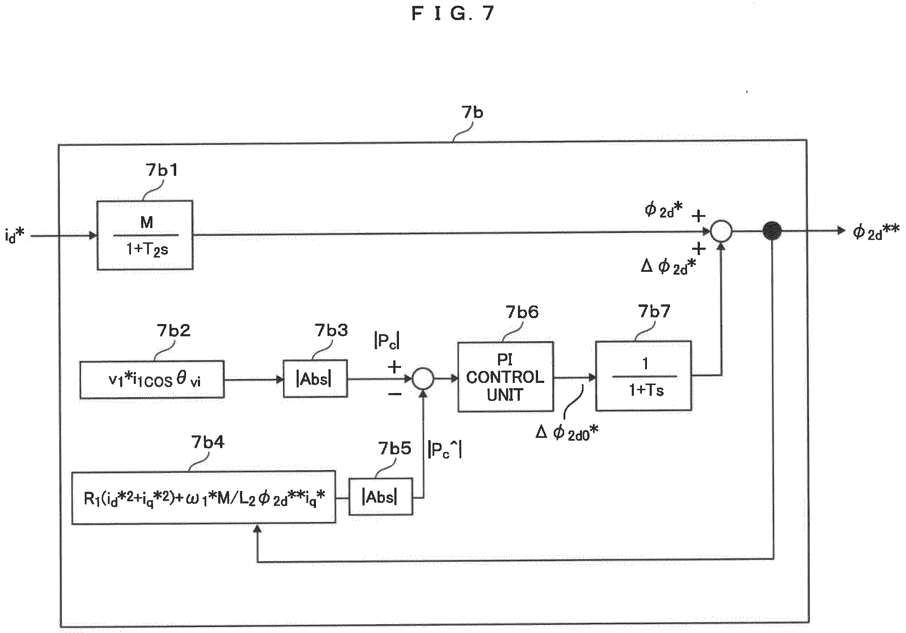

Fig. 7 is a configuration diagram of a d-axis secondary magnetic flux estimation computation unit in the second embodiment. In the present embodiment, the configuration other than the d-axis secondary magnetic flux estimation computation unit is the same as that in the first embodiment. In the first embodiment, the first active power P_{c} is computed from the d-axis and q-axis voltage command values v_{dc}** and v_{qc}** and the current detection values i_{dc} and i_{qc}.

In the second embodiment, the active power P_{c} is computed using an amplitude value V₁* of a voltage command of a three-phase AC as voltage information of the induction motor, an amplitude value i₁ of current detection as current information of the induction motor, and a cosine signal of a phase θᵥᵢ.

Reference symbol 7b of Fig. 7 corresponds to the d-axis secondary magnetic flux estimation computation unit 7 of Fig. 2. In addition, reference symbols 7b1, 7b3, 7b4, 7b5, 7b6, and 7b7 of Fig. 7 are the same as the LPF 71, the absolute value computation unit 73, the second active power computation unit 74, the absolute value computation unit 75, the PI control unit 76, and LPF 77 of Fig. 2, respectively.

In Fig. 7, in a first active power computation unit 7b2, the amplitude value V₁* of the voltage command of the three-phase AC is obtained from (Equation 12), the amplitude value i₁ of the current detection value is obtained from (Equation 13), the phase θᵥᵢ is obtained from (Equation 14), and the active power P_{c} is computed using (Equation 15).
[Equation 12] ${{v}_{1}}^{∗} = \sqrt{{{v}_{dc}}^{∗ ∗} + {{v}_{qc}}^{∗ ∗}}$ (12)
[Equation 13] ${i}_{1} = \sqrt{{{i}_{dc}}^{2} + {{i}_{qc}}^{2}}$ (13)
[Equation 14] ${θ}_{vi} = {tan}^{- 1} \left[-\frac{{v}_{dc}^{∗ ∗}}{{v}_{qc}^{∗ ∗}}\right] + {tan}^{- 1} \left[-\frac{{i}_{dc}}{{i}_{qc}}\right]$ (14)
[Equation 15] ${P}_{c} = {v}_{1} * {i}_{1} cos \left[{θ}_{vi}\right]$ (15)

A highly accurate control characteristic can be realized as in the first embodiment even when the present embodiment is used.

In addition, in the second embodiment, as in Fig. 5, in the PI control unit 7a6, the gains (Kₚ and Kᵢ) of the proportional control and the integral control can be changed in approximately proportion to the magnitude of the output frequency command value ω₁* or the q-axis current command value i_{q}*. In this way, it is possible to realize a highly accurate control characteristic in a shorter time even from a low speed range to a high speed range and from a light load to a heavy load.

### Third embodiment

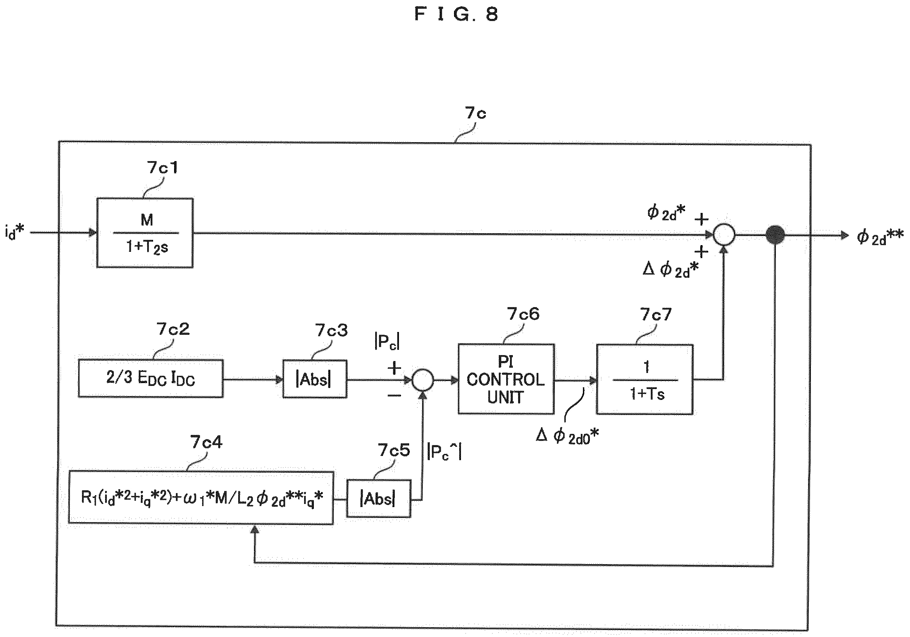

Fig. 8 is a configuration diagram of a d-axis secondary magnetic flux estimation computation unit in a third embodiment. In the present embodiment, the configuration other than the d-axis secondary magnetic flux estimation computation unit is the same as that in the first embodiment. In the first embodiment, the first active power P_{c} is computed from the d-axis and q-axis voltage command values v_{dc}** and v_{qc}** and the current detection values i_{dc} and i_{qc}.

In the third embodiment, the active power P_{c} is computed using a DC voltage value E_{DC} of the DC power supply 3 that supplies a DC voltage to the power converter 2 as voltage information of the induction motor and a DC current value I_{DC} supplied from the DC power supply 3 as current information of the induction motor.

Reference symbol 7c of Fig. 8 corresponds to the d-axis secondary magnetic flux estimation computation unit 7 of Fig. 2. In addition, reference symbols 7c1, 7c3, 7c4, 7c5, 7c6, and 7c7 of Fig. 7 are the same as the LPF 71, the absolute value computation unit 73, the second active power computation unit 74, the absolute value computation unit 75, the PI control unit 76, and LPF 77 of Fig. 2, respectively.

In Fig. 7, in 7c2, using a DC voltage detection value E_{DC} and a DC current detection value I_{DC} of the power converter, the active power P_{c} is computed using (Equation 16).
[Equation 16] ${P}_{c} = 2 / 3 {E}_{DC} {I}_{DC}$ (16)

Even when the present embodiment is used, a highly accurate control characteristic can be realized as in the first embodiment.

In addition, in the third embodiment, as in Fig. 5, in the PI control unit 7c6, the gains (Kₚ and Kᵢ) of the proportional control and the integral control can be changed in approximately proportion to the magnitude of the output frequency command value ω₁* or the q-axis current command value i_{q}*.

### Fourth embodiment not encompassed by the wording of the claims

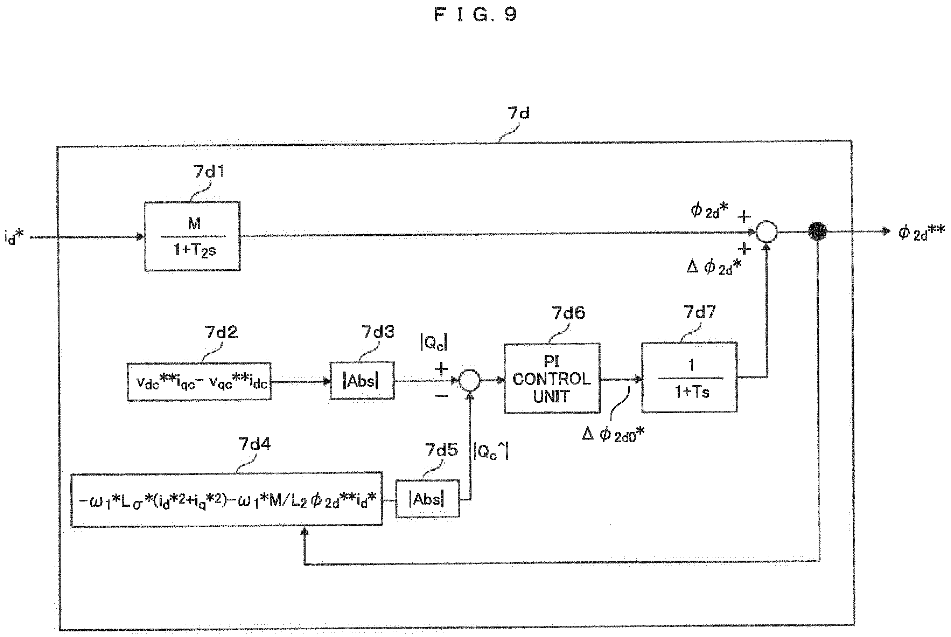

Fig. 9 is a configuration diagram of a d-axis secondary magnetic flux estimation computation unit in a fourth embodiment not encompassed by the wording of the claims. In the present embodiment, the configuration other than the d-axis secondary magnetic flux estimation computation unit is the same as that in the first embodiment. In the first embodiment, two pieces of active power information are used. However, from the present embodiment, two pieces of reactive power information are used.

Reference symbol 7d of Fig. 9 corresponds to the d-axis secondary magnetic flux estimation computation unit 7 of Fig. 2. In addition, reference symbols 7d1, 7d3, 7d5, 7d6, and 7d7 of Fig. 7 are the same as the LPF 71, the absolute value computation unit 73, the absolute value computation unit 75, the PI control unit 76, and LPF 77 of Fig. 2, respectively.

A first reactive power computation unit 7d2 computes first reactive power Q_{c} according to (Equation 17) using the d-axis voltage command value v_{dc}** and q-axis voltage command value v_{qc}** as voltage information of the induction motor and the current detection values i_{dc} and i_{qc} as current information of the induction motor.
[Equation 17] ${Q}_{c} = {{v}_{{d}^{c}}}^{∗ ∗} {i}_{qc} - {{v}_{qc}}^{∗ ∗} {i}_{dc}$ (17)

To support both power running/regenerative operation modes, an output of the first reactive power computation unit 7d2 is passed through an absolute value computation unit 7d3 to compute the absolute value |Q_{c}| of first reactive power Q_{c}.

A second reactive power computation unit 7d4 computes second reactive power Q_{c}^ according to (Equation 18) using the d-axis and q-axis current command values i_{d}* and i_{q}*, the output frequency command value ω₁*, R1, M, and L₂ which are electric circuit constants of the induction motor 1, and the d-axis magnetic flux estimated value Φ_{2d}**.
[Equation 18] ${{Q}_{c}}^{∧} = - {{ω}_{1}}^{∗} {{L}_{σ}}^{∗} \left({{i}_{d}}^{∗ 2}+{{i}_{q}}^{∗ 2}\right) - {{ω}_{1}}^{∗} {M}^{∗} / {{L}_{2}}^{∗} {{ϕ}_{2 d}}^{∗ ∗} {{i}_{d}}^{∗}$ (18)

To support both power running/regenerative operation modes, an output of the second reactive power computation unit 7d4 is passed through an absolute value computation unit 7d5 to compute the absolute value |Q_{c}^| of second reactive power Q_{c}^.

A PI control unit 7d6 performs P (proportional) + I (integral) control so that the absolute value |Q_{c}^| of the second reactive power Q_{c}^ follows the absolute value |Q_{c}| of the first reactive power Q_{c}, and computes a d-axis secondary magnetic flux command correction value Δϕ_{2d0}*.

A LPF 7d7 has gain with a time constant of T, the d-axis secondary magnetic flux command correction value Δϕ_{2d0}* is input to the LPF 7d7, and the LPF 7d7 computes a d-axis secondary magnetic flux command correction value Δϕ_{2d}*. Using Δϕ_{2d}* and the d-axis secondary magnetic flux command value ϕ_{2d}*, the d-axis secondary magnetic flux estimated value ϕ_{2d}** is computed according to (Equation 10).

In the present embodiment, by correcting the d-axis secondary magnetic flux command value ϕ_{2d}* so that the absolute value |Q_{c}^| of the second reactive power Q_{c}^ follows the absolute value |Q_{c}| of the first reactive power Q_{c}, it is possible to realize a highly accurate control characteristic regardless of the power running/regenerative operation mode even when there is an error in a set value R₁* of the resistance, which is an electric circuit constant.

In the fourth embodiment not encompassed by the wording of the claims, as in Fig. 5, in the PI control unit 7a6, the gains (Kₚ and Kᵢ) of the proportional control and the integral control can be changed in approximately proportion to the magnitude of the output frequency command value ω₁* or the q-axis current command value i_{q}*. In this way, it is possible to realize a highly accurate control characteristic in a shorter time even from a low speed range to a high speed range and from a light load to a heavy load.

### Fifth embodiment not encompassed by the wording of the claims

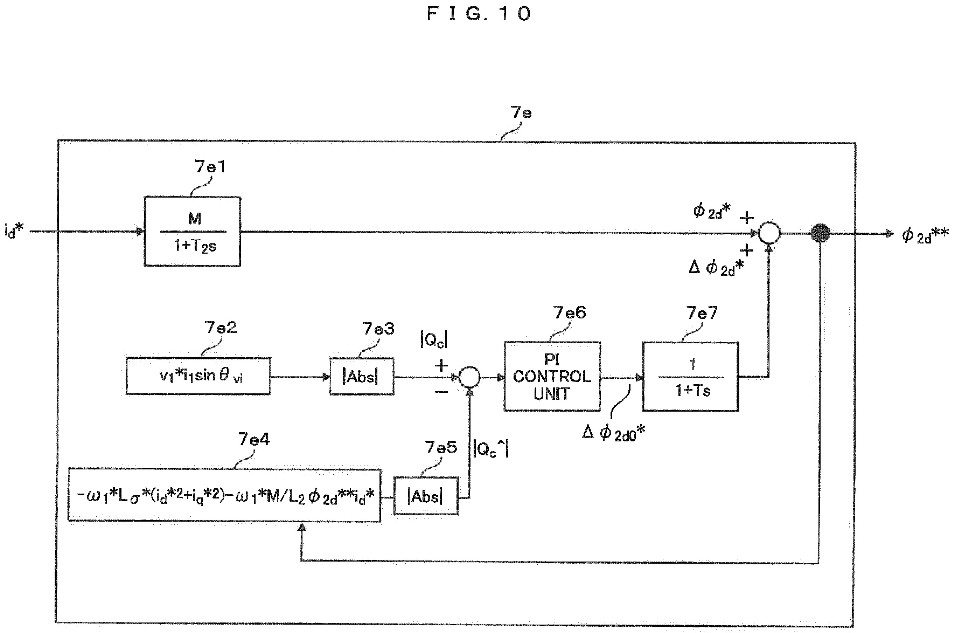

Fig. 10 is a configuration diagram of a d-axis secondary magnetic flux estimation computation unit in a fifth embodiment not encompassed by the wording of the claims. In the present embodiment, the configuration other than the d-axis secondary magnetic flux estimation computation unit is the same as that in the first embodiment. In the fourth embodiment not encompassed by the wording of the claims, first reactive power Q_{c} is computed from the d-axis and q-axis voltage command values v_{dc}** and v_{qc}** and the current detection values i_{dc} and i_{qc}.

In the fifth embodiment not encompassed by the wording of the claims, the reactive power Q_{c} is computed using an amplitude value V₁* of a voltage command of a three-phase AC as voltage information of the induction motor, an amplitude value i₁ of current detection as current information of the induction motor, and a phase θᵥᵢ.

Reference symbol 7e of Fig. 10 corresponds to the d-axis secondary magnetic flux estimation computation unit 7d of Fig. 9. In addition, reference symbols 7e1, 7e3, 7e4, 7e5, 7e6, and 7e7 of Fig. 10 are the same as the LPF 7d1, the absolute value computation unit 7d3, the second reactive power computation unit 7d4, the absolute value computation unit 7d5, the PI control unit 7d6, and LPF 7d7 of Fig. 9, respectively.

In Fig. 10, in 7e2, the amplitude value V₁* of the voltage command of the three-phase AC is computed using (Equation 12), the amplitude value i₁ of the current detection value is computed using (Equation 13), and the reactive power Q_{c} is computed using a sine signal of a phase θᵥᵢ by (Equation 19).
[Equation 19] ${Q}_{c} = {v}_{1} * {i}_{1} sin \left[{θ}_{vi}\right]$ (19)

Even when the present embodiment is used, similarly to the fourth embodiment not encompassed by the wording of the claims, it is possible to realize a highly accurate control characteristic regardless of both power running/regenerative torque modes even when there is an error in a set value R₁* of the resistance.

In the fifth embodiment not encompassed by the wording of the claims, as in Fig. 5, in the PI control unit 7e6, the gains (Kₚ and Kᵢ) of the proportional control and the integral control can be changed in approximately proportion to the magnitude of the output frequency command value ω₁* or the q-axis current command value i_{q}*. In this way, it is possible to realize a highly accurate control characteristic in a shorter time even from a low speed range to a high speed range and from a light load to a heavy load.

### Sixth embodiment

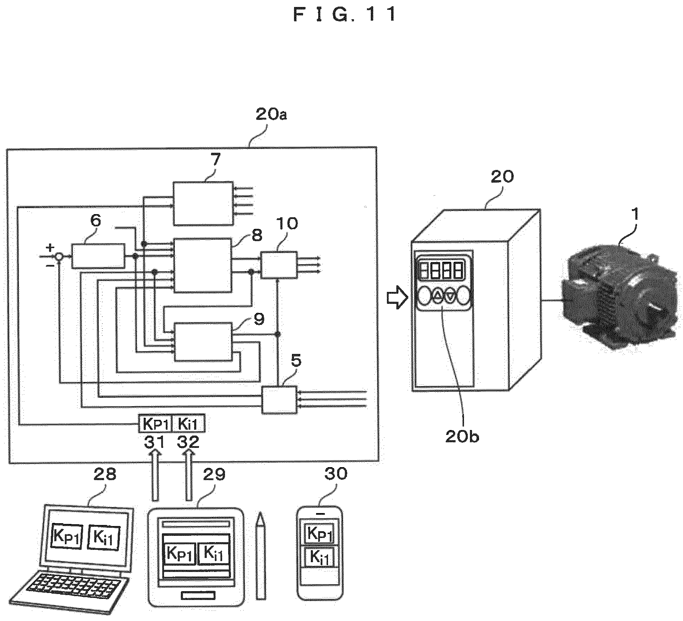

Fig. 11 is a configuration diagram of a system including a power conversion device and an induction motor according to a sixth embodiment. The present embodiment is an application of the present embodiment to an induction motor drive system. In Fig. 11, an induction motor 1, a coordinate transformation unit 5, a speed control computation unit 6, a d-axis secondary magnetic flux estimation computation unit 7, a vector control computation unit 8, and a frequency/phase estimation computation unit 9 have the same configuration as that of Fig. 1.

The induction motor 1, which is a component of Fig. 1, is driven by a power conversion device 20. The power conversion device 20 is divided into software 20a and hardware. The coordinate transformation unit 5, the speed control computation unit 6, the d-axis secondary magnetic flux estimation computation unit 7, the vector control computation unit 8, the frequency/phase estimation computation unit 9, and the coordinate transformation unit 10 of Fig. 1 are the software 20a. The same parts of the software 20a of Fig. 11 as those of Fig. 1 are partially omitted.

The power converter 2, the DC power supply 3, and the current detector 4 of Fig. 1 are mounted as hardware. Further, it is possible to set predetermined proportional gain 31 and predetermined integral gain 32 of the software 20a in a recording unit of the control unit or change recorded gain by a higher-level device such as a digital operator 20b, a personal computer 28, a tablet PC 29, or a smartphone 30 performing operation or display of the power conversion device 20.

For example, proportional gain Kp1 or integral gain Ki1 of the PI control unit 76 in the d-axis secondary magnetic flux estimation computation unit 7 can be set externally or the gain can be changed.

When the present embodiment is applied to the induction motor drive system, a highly accurate control characteristic can be realized in speed sensorless vector control. Further, the predetermined proportional gain 31 and the predetermined integral gain 32 may be set on a fieldbus of a programmable logic controller, a local area network connected to a computer, or a control device.

Further, even though the sixth embodiment is disclosed using the first embodiment, any one of the second or third embodiments may be used.

In the first to third embodiments, the voltage correction values Δv_{dc} and Δv_{qc} are created from the current command values i_{d}* and i_{q}* and the current detection values i_{dc} and i_{qc}, and computation shown in (Equation 3) of adding the voltage correction values and a voltage reference value of vector control is performed.

It is possible to create intermediate current command values i_{d}** and i_{q}** shown in (Equation 20) used for vector control computation from the current command values i_{d}* and i_{q}* and the current detection values i_{dc} and i_{qc}, and perform vector control computation shown in (Equation 21) using the output frequency command value ω₁* and the electric circuit constant of the induction motor 1.
[Equation 20] $\left[\begin{matrix}{i}_{d} * * = \left({K}_{pd 1}+\frac{{K}_{id 1}}{s}\right) \left({i}_{d}*-{i}_{dc}\right) \\ {i}_{q} * * = \left({K}_{pq 1}+\frac{{K}_{iq 1}}{s}\right) \left({i}_{q}*-{i}_{qc}\right)\end{matrix}\right]$ (20)

Here, K_{pd1} denotes proportional gain of d-axis current control, Ki_{q1} denotes integral gain of d-axis current control, K_{pq1} denotes proportional gain of q-axis current control, K_{iq1} denotes integral gain of q-axis current control, T_{d} denotes d-axis electrical time constant (L_{σ}/R), and T_{q} denotes q-axis electrical time constant (L_{σ}/R).
[Equation 21] $\left[\begin{matrix}{v}_{dc} * * * = {R}_{1} ⋅ {i}_{d} * * - {ω}_{1} * ⋅ {L}_{σ} ⋅ \frac{1}{1 + {T}_{d} s} {i}_{q} * * \\ {v}_{qc} * * * = {R}_{1} ⋅ {i}_{q} * * + {ω}_{1} * ⋅ {L}_{σ} ⋅ \frac{1}{1 + {T}_{q} s} {i}_{d} * * + {ω}_{1} * ⋅ \frac{M}{{L}_{2}} ⋅ {ϕ}_{2 d} * *\end{matrix}\right]$ (21)

A voltage correction value Δv_{d_p}* of a d-axis proportional computation component, a voltage correction value Δv_{d_i}* of a d-axis integral computation component, a voltage correction value Δv_{q_p}* of a q-axis proportional computation component, and a voltage correction value Δv_{q_i}* of a q-axis integral computation component used for vector control computation may be computed by (Equation 22) from the current command values i_{d}** and i_{q}* and the current detection values i_{dc} and i_{qc}, and vector control computation shown in (Equation 23) may be performed using the output frequency command value ω₁* and the electric circuit constants of the induction motor 1.
[Equation 22] $\left[\begin{matrix}{Δv}_{d_p} * = {K}_{pd 2} \left({i}_{d}**-{i}_{dc}\right) \\ {Δv}_{d_i} * = \frac{{K}_{id 2}}{s} \left({i}_{d}**-{i}_{dc}\right) \\ {Δv}_{q_p} * = {K}_{pq 2} \left({i}_{q}*-{i}_{qc}\right) \\ {Δv}_{q_i} * = \frac{{K}_{iq 2}}{s} \left({i}_{q}*-{i}_{qc}\right)\end{matrix}\right]$ (22)

Here, K_{pd2} denotes proportional gain of d-axis current control, K_{id2} denotes integral gain of d-axis current control, K_{pq2} denotes proportional gain of q-axis current control, and K_{iq2} denotes integral gain of q-axis current control.
[Equation 23] $\left[\begin{matrix}{v}_{dc} * * * * = \left({Δv}_{d_p}*+{Δv}_{d_i}*\right) - {ω}_{1} * ⋅ \frac{{L}_{σ}}{{R}_{1}} ⋅ {Δv}_{q_i} * \\ {v}_{qc} * * * * = \left({Δv}_{q_p}*+{Δv}_{q_i}*\right) + {ω}_{1} * ⋅ \frac{{L}_{σ}}{{R}_{1}} ⋅ {Δv}_{d_i} * + {ω}_{1} * ⋅ \frac{M}{{L}_{2}} ⋅ {ϕ}_{2 d} *\end{matrix}\right]$ (23)

Further, an output frequency command value ω₁** shown in (Equation 24) and vector control computation shown in (Equation 25) may be performed using the d-axis current command value i_{d}*, a primary delay signal i_{qctd} of the q-axis current detection value i_{qc}, the frequency command value ωᵣ*, and the electric circuit constants of the induction motor 1.
[Equation 24] ${ω}_{1} * * = {ω}_{r} * + \frac{M *}{{T}_{2} *} \frac{{i}_{qc}}{{ϕ}_{2 d} * *}$ (24)
[Equation 25] $\left[\begin{matrix}{v}_{dc} * * * * * = {R}_{1} ⋅ {i}_{d} * - {ω}_{1} * * ⋅ {L}_{σ} ⋅ {i}_{qctd} \\ {v}_{qc} * * * * * = {R}_{1} ⋅ {i}_{qctd} + {ω}_{1} * * ⋅ {L}_{σ} ⋅ {i}_{d} * + {ω}_{1} * * ⋅ \frac{M}{{L}_{2}} ⋅ {ϕ}_{2 d} * *\end{matrix}\right]$ (25)

Here, i_{qctd} is a signal obtained by passing i_{qc} through a primary delay filter.

In the first to third embodiments, the frequency/phase estimation computation unit 9 computes a frequency estimated value according to (Equation 5). Current control and speed estimation may be used together in q-axis current control. A frequency estimated value ωᵣ^^ is computed as shown in (Equation 26).
[Equation 26] ${{ω}_{r}}^{∧ ∧} = \left({K}_{pq 3}+\frac{{K}_{iq 3}}{s}\right) \left({i}_{q}*-{i}_{qc}\right)$ (26)

Here, K_{pq3} is proportional gain of current control, and K_{iq3} is integral gain of current control.

Further, in the frequency/phase estimation computation unit 9, the frequency estimated value is computed according to (Equation 5) or (Equation 26). However, it is possible to attach an encoder to the induction motor 1 and compute a frequency detection value from an encoder signal.

Note that in the first to third and sixth embodiments, as a switching element included in the power converter 2, it is possible to use a Si (silicon) semiconductor element, or a wide bandgap semiconductor element of SiC (Silicon Carbide), GaN (Gallium Nitride), etc.

### REFERENCE SIGNS LIST

- 1: Induction motor
- 2: Power converter
- 3: DC power supply
- 4: Current detector
- 5: Coordinate transformation unit
- 6: Speed control computation unit
- 7: d-axis secondary magnetic flux estimation computation unit
- 8: Vector control computation unit
- 9: Frequency/phase estimation computation unit
- 10: Coordinate transformation unit

## Claims

1. A power conversion device comprising:
a power converter (2) including a switching element; and
a control unit for controlling the power converter (2) from voltage information and current information of an induction motor (1),
wherein the control unit
computes first power information computed from voltage information and current information of the induction motor (1),
computes second power information from an electric circuit constant, a current command value, an output frequency command value, and a magnetic flux estimated value of the induction motor (1), and
computes the magnetic flux estimated value so that the second power information follows the first power information, wherein the first power information and the second power information are active power,
wherein the control unit
computes the first power information from d-axis and q-axis voltage command values and d-axis and q-axis detection currents or computes the first power information from a voltage command value of a three-phase AC and an amplitude value of a current detection value,
computes the second power information from the electric circuit constant, d-axis and q-axis current command values, the output frequency command value, and a d-axis magnetic flux estimated value of the induction motor (1), and
computes the d-axis magnetic flux estimated value so that the second power information follows the first power information.

2. The power conversion device according to claim 1,
wherein the control unit
computes the first power information from a DC voltage value and a DC current value of the power converter (2),
computes the second power information from the electric circuit constant, d-axis and q-axis current command values, the output frequency command value, and a d-axis magnetic flux estimated value of the induction motor (1), and
computes the d-axis magnetic flux estimated value so that the second power information follows the first power information.

3. The power conversion device according to claim 1, wherein the control unit computes the magnetic flux estimated value by proportional control and integral control so that a deviation between the first power information and the second power information becomes zero.

4. The power conversion device according to claim 3, wherein control gains of the proportional control and the integral control are corrected based on at least one of the output frequency command value or a q-axis current command value of the induction motor (1).

5. The power conversion device according to claim 4, wherein control gain set in proportional control or integral control is set in a recording unit from a digital operator, a personal computer, a tablet PC, or a smartphone device, or set control gain is changed.

6. The power conversion device according to claim 1, further comprising:
a vector control computation unit (8) for outputting a voltage command value based on the magnetic flux estimated value; and
a frequency/phase estimation computation unit (9) for outputting the output frequency command value and a frequency estimated value based on the magnetic flux estimated value.

## Patentansprüche

1. Leistungsumsetzungsvorrichtung, die Folgendes umfasst:
einen Leistungsumsetzer (2), der ein Schaltelement enthält; und
eine Steuereinheit zum Steuern des Leistungsumsetzers (2) gemäß Spannungsinformationen und Strominformationen eines Induktionsmotors (1),
wobei die Steuereinheit
erste Leistungsinformationen berechnet, die aus Spannungsinformationen und Strominformationen des Induktionsmotors (1) berechnet werden,
zweite Leistungsinformationen aus einer elektrischen Schaltungskonstante, einem Strombefehlswert, einem Ausgangsfrequenz-Befehlswert und einem Magnetfluss-Schätzwert des Induktionsmotors (1) berechnet und
den Magnetfluss-Schätzwert derart berechnet, dass die zweiten Leistungsinformationen den ersten Leistungsinformationen folgen, wobei die ersten Leistungsinformationen und die zweiten Leistungsinformationen Wirkleistung sind,
wobei die Steuereinheit
die ersten Leistungsinformationen aus d-Achsen- und q-Achsen-Spannungsbefehlswerten und d-Achsen- und q-Achsen-Detektionsströmen berechnet oder die ersten Leistungsinformationen aus einem Spannungsbefehlswert einer Dreiphasen-Wechselspannung und einem Amplitudenwert eines Stromdetektionswertes berechnet,
die zweiten Leistungsinformationen aus der elektrischen Schaltungskonstante, d-Achsen- und q-Achsen-Strombefehlswerten, dem Ausgangsfrequenz-Befehlswert und einem d-Achsen-Magnetfluss-Schätzwert des Induktionsmotors (1) berechnet, und
den d-Achsen-Magnetfluss-Schätzwert derart berechnet, dass die zweiten Leistungsinformationen den ersten Leistungsinformationen folgen.

2. Leistungsumsetzungsvorrichtung nach Anspruch 1,
wobei die Steuereinheit
die ersten Leistungsinformationen aus einem Gleichspannungswert und einem Gleichstromwert des Leistungsumsetzers (2) berechnet,
die zweiten Leistungsinformationen aus der elektrischen Schaltungskonstante, d-Achsen- und q-Achsen-Strombefehlswerten, dem Ausgangsfrequenz-Befehlswert und einem d-Achsen-Magnetfluss-Schätzwert des Induktionsmotors (1) berechnet, und
den d-Achsen-Magnetfluss-Schätzwert derart berechnet, dass die zweiten Leistungsinformationen den ersten Leistungsinformationen folgen.

3. Leistungsumsetzungsvorrichtung nach Anspruch 1, wobei die Steuereinheit den Magnetfluss-Schätzwert durch Proportionalsteuerung und Integralsteuerung berechnet, derart, dass eine Abweichung zwischen den ersten Leistungsinformationen und den zweiten Leistungsinformationen null wird.

4. Leistungsumsetzungsvorrichtung nach Anspruch 3, wobei Steuerungsverstärkungen der Proportionalsteuerung und der Integralsteuerung auf der Grundlage des Ausgangsfrequenz-Befehlswertes und/oder eines q-Achsen-Strombefehlswertes des Induktionsmotors (1) korrigiert werden.

5. Leistungsumsetzungsvorrichtung nach Anspruch 4, wobei eine Steuerungsverstärkung, die in der Proportionalsteuerung oder der Integralsteuerung eingestellt wird, in einer Aufzeichnungseinheit von einem digitalen Bediener, einem Personal-Computer, einem Tablet-PC oder einer Smartphone-Vorrichtung eingestellt wird oder eine eingestellte Steuerungsverstärkung geändert wird.

6. Leistungsumsetzungsvorrichtung nach Anspruch 1, die ferner Folgendes umfasst:
eine Vektorsteuerungs-Berechnungseinheit (8) zum Ausgeben eines Spannungsbefehlswertes auf der Grundlage des Magnetfluss-Schätzwertes; und
eine Frequenz/Phasen-Schätzungsberechnungseinheit (9) zum Ausgeben des Ausgangsfrequenz-Befehlswertes und eines Frequenzschätzwertes auf der Grundlage des Magnetfluss-Schätzwertes.

## Revendications

1. Dispositif de conversion de puissance comprenant :
un convertisseur de puissance (2) incluant un élément de commutation ; et
une unité de commande destinée à commander le convertisseur de puissance (2) à partir d'informations de tension et d'informations de courant d'un moteur à induction (1),
dans lequel l'unité de commande
calcule des premières informations de puissance calculées à partir d'informations de tension et d'informations de courant du moteur à induction (1),
calcule des deuxièmes informations de puissance à partir d'une constante de circuit électrique, d'une valeur d'ordre de courant, d'une valeur d'ordre de fréquence de sortie, et d'une valeur estimée de flux magnétique du moteur à induction (1), et
calcule la valeur estimée de flux magnétique de telle sorte que les deuxièmes informations de puissance suivent les premières informations de puissance, les premières informations de puissance et les deuxièmes informations de puissance étant une puissance active,
dans lequel l'unité de commande
calcule les premières informations de puissance à partir de valeurs d'ordre de tension d'axe d et d'axe q et de courants de détection d'axe d et d'axe q, ou calcule les premières informations à partir d'une valeur d'ordre de tension d'un courant alternatif CA triphasé et d'une valeur d'amplitude d'une valeur de détection de courant,
calculer les deuxièmes informations de puissance à partir de la constante de courant électrique, de valeurs d'ordre de courant d'axe d et d'axe q, de la valeur d'ordre de fréquence de sortie, et d'une valeur estimée de flux magnétique d'axe d du moteur à induction (1), et
calcule la valeur estimée de flux magnétique d'axe d de telle sorte que les deuxièmes informations de puissance suivent les premières informations de puissance.

2. Dispositif de conversion de puissance selon la revendication 1,
dans lequel l'unité de commande
calcule les premières informations de puissance à partir d'une valeur de tension en courant continu CC et une valeur de courant CC du convertisseur de puissance (2),
calcule les deuxièmes informations de puissance à partir de la constante de circuit électrique, des valeurs d'ordre de courant d'axe d et d'axe q, des valeurs d'ordre de courant d'axe d et d'axe q, de la valeur d'ordre de fréquence de sortie, et d'une valeur estimée de flux magnétique d'axe d du moteur à induction (1), et
calcule la valeur estimée de flux magnétique d'axe d de telle sorte que les deuxièmes informations de puissance suivent les premières informations de puissance.

3. Dispositif de conversion de puissance selon la revendication 1, dans lequel l'unité de commande calcule la valeur estimée de flux magnétique par une commande proportionnelle et une commande intégrale de telle sorte qu'un écart entre les premières informations de puissance et les deuxièmes informations de puissance devient nul.

4. Dispositif de conversion de puissance selon la revendication 3, dans lequel des gains de commande de la commande proportionnelle et de la commande intégrale sont corrigés sur la base de l'une au moins de la valeur d'ordre de fréquence de sortie et d'une valeur d'ordre de courant d'axe q du moteur à induction (1).

5. Dispositif de conversion de puissance selon la revendication 4, dans lequel un gain de commande défini dans une commande proportionnelle ou une commande intégrale est défini dans une unité d'enregistrement depuis un opérateur numérique, un ordinateur personnel, une tablette PC, ou un dispositif de smartphone, ou bien un gain de commande est modifié.

6. Dispositif de conversion de puissance selon la revendication 1, comprenant en outre :
une unité de calcul de commande de vecteur (8) destinée à sortir une valeur d'ordre de tension sur la base de la valeur estimée de flux magnétique ; et
une unité de calcul d'estimation de fréquence/phase (9) destinée à sortir la valeur d'ordre de fréquence de sortie et une valeur estimée de fréquence sur la base de la valeur estimée de flux magnétique.
